# EUROPEAN PATENT SPECIFICATION

(11) **EP 2 026 345 B1**
(45) Date of publication and mention of the grant of the patent: **13.01.2010**
(21) Application number: 08252556.9
(22) Date of filing: 28.07.2008
(51) Int. Cl.: G11B 7/09

(54) **Optical-information reproducing system**
System zur Wiedergabe optischer Informationen
Système de reproduction d'informations optiques

(30) Priority: 31.07.2007 JP 2007198892
(43) Date of publication of application: 18.02.2009
(73) Proprietor: TAIYO YUDEN CO., LTD., Tokyo 110-0005 (JP)
(72) Inventor: Shimizu, Atsuo c/o Taiyo Yuden Co. Ltd, Tokyo, 110-0005 (JP)
(74) Representative: Jackson, Richard Eric

(56) References cited:
- GB-A- 1 503 197
- JP-A- 2003 006 894
- JP-A- 2003 045 053
- JP-A- 2005 293 650
- US-A1- 2005 174 901

## Description

### BACKGROUND OF THE INVENTION

### 1. Field of the Invention

The present invention relates to an optical-information reproducing system, which includes an optical-information recording medium and an optical disk apparatus, for reproducing information that is recorded on the optical-information recording medium.

### 2. Description of the Related Art

A write-once compact disk (CD) (a so-called compact-disk recordable (CD-R) disk) has the following configuration: a spiral groove, to which an optical head is guided and which is used to record information, is provided in one surface of an optically transparent substrate having a diameter of 12 cm and a thickness of 1.2 mm; and a recording layer and a reflecting layer are formed in this order on a surface in which the groove is formed. The groove has a wobble which is formed in such a manner that meandering is repeated at a fixed period along a running direction in order to allow accurate position information to be obtained. The groove is also referred to as a "track". The groove has a trapezoid shape in the running direction. In the trapezoid shape, the top is broadly opened, and the bottom surface is slightly narrower. Laser light having a wavelength of typically about 780 nm is irradiated from the other surface side of the optically transparent substrate, whereby data is recorded in and/or reproduced from the recording layer. A write-once digital-versatile disk (DVD) (a so-called digital-versatile disk recordable (DVD-R) disk) has the following configuration: a spiral groove having a wobble is provided in one surface of an optically transparent substrate having a diameter of 12 cm and a thickness of 0.6 mm as in the above-mentioned case, and the pitch of the groove is lower than half that of the groove of the CD-R; a recording layer and a reflecting layer are formed in this order in a surface in which the groove is formed; and a dummy substrate having a diameter 12 cm and a thickness of 0.6 mm is attached to the top of the reflecting layer. Laser light having a wavelength of typically about 630 nm to 680 nm is irradiated from the other surface side of the optically transparent substrate, whereby data is recorded in and/or reproduced from the recording layer.

In optical disk apparatuses in which data is recorded on and/or reproduced from the above-described optical-information recording media, recently, recording intensity has been increased, and recording and reading velocities have been increased. Because of this, a higher-order resonance having a frequency of about 10 kHz to 40 kHz have become a significant problem, which is mainly caused by elastic deformation of movable units (objective-lens-holding units) of optical-pickup-drive devices. The higher-order resonance is a second- or higher-order resonance. The higher-order resonance occurs at a frequency higher than that at which a first-order resonance occurs, and occurs due to elastic deformation in a mode different from the mode of elastic deformation in which the first-order resonance occurs. In order to provide high-speed reproduction, it is necessary that a ratio indicating a degree of movement of a movable unit in response to an input voltage (current), i.e., a gain (more particularly, a gain in a lower range), be made large. However, when the gain in a lower range is made large, it becomes difficult to ignore the higher-order resonance of an optical pickup. When the gain in a lower range is made large, the difference (a gain margin) between a gain at a certain reference frequency (around a crossover frequency of a servo) and a gain at a peak of the higher-order resonance becomes small or negative. This leads to a problem that the tracking capability of the optical pickup is decreased, and that the optical pickup fails to track a groove. For example, in a case of an optical-information recording medium, such as the DVD-R, that is rotated at a fixed velocity which is a linear velocity of 3.49 m/s to reproduce information, a rotational speed is about 9.6 rps in an outer peripheral area (positioned at a radial distance of about 58 mm). In contrast, the rotational speed becomes about 24.2 rps in an inner peripheral area (positioned at a radial distance of about 23 mm). Accordingly, because a change in the rotational speed between the inner and outer peripheral areas becomes large, the above-described problem easily occurs. A large gain margin allows the servo to be stably controlled. Thus, an output acceleration of an optical-pickup drive device is increased, and the tracking capability can be increased to cope with surface deflection or eccentricity of the optical-information recording medium.

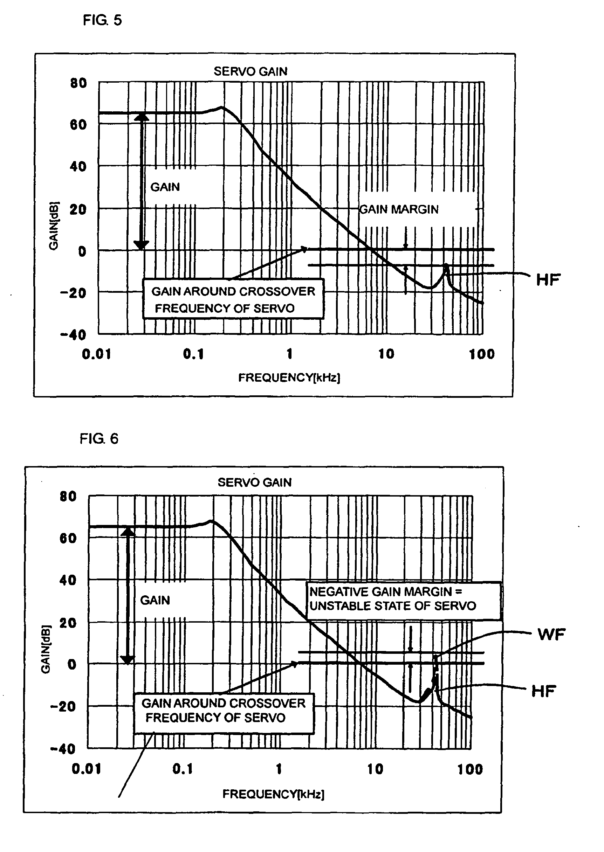

In order to deal with the above-described problem, for example, as disclosed in Japanese Unexamined Patent Application Publication No. 2003-45053, means is proposed, in which a gain margin is increased by making a peak of a higher-order resonance such as the above-mentioned peak of the higher-order resonance lower, resulting in an increase in the tracking capability of an optical pickup. Recently, a design has been made, in which elastic deformation of movable units of drive devices can be suppressed by weight reduction such as the use of lighter objective lenses. Furthermore, because the weight of lenses of optical pickups has been reduced, optical pickups whose higher-order resonance frequency HF exceeds 40 kHz as shown in a graph of Fig. 5 have been realized.

However, when the higher-order resonance frequency HF exceeds 40 kHz because the weight of lenses of optical pickups has been reduced, problems described below have arisen.

In a case in which an optical-information recording medium is rotated at a fixed linear velocity when information is reproduced, a rotational speed is changed on the basis of a frequency of a signal obtained from a meander period of a groove, i.e., a wobble frequency. Accordingly, a rotational speed in a case in which data is being recorded/reproduced in an inner peripheral area differs from a rotational speed in a case in which data is being recorded/reproduced in an outer peripheral area. Typically, the rotational speed in a case in which data is being recorded/reproduced in an inner peripheral area is faster than that in a case in which data is being recorded/reproduced in an outer peripheral area. However, when tracking is performed, no rotational speed control is performed on the optical-information recording medium at an instant at which an optical pickup is caused to track a groove. For this reason, when the optical pickup is moved from the inner peripheral area to the outer peripheral area or from the outer peripheral area to the inner peripheral area, the rotational speed is not changed, but the linear velocity is changed. Thus, the wobble frequency changes. More specifically, when the optical pickup is moved from the outer peripheral area to the inner peripheral area, the wobble frequency decreases.

For example, in the case of the DVD-R, the wobble frequency is typically about 140 kHz. However, at an instant at which the optical pickup is caused to track the groove, the wobble frequency decreases up to about 56 kHz in accordance with a ratio of a rotational speed of about 9.6 rps in an area positioned at a radial distance of about 58 mm to a rotational speed of about 24.2 rps in an area positioned at a radial distance of about 23 mm. In such a case, the wobble frequency becomes lower than the higher-order resonance frequency of the optical pickup in some cases. In other words, the relationship that the wobble frequency < the higher-order resonance frequency is obtained. When the rotational speed is increased by driving a tracking servo in order to maintain rotational synchronization again, the wobble frequency becomes equal to the higher-order resonance frequency. In this case, as shown in a graph of Fig. 6, a wobble signal WF is superimposed on the higher-order resonance frequency HF. As a result, the peak of the higher-order resonance becomes higher, and the gain margin becomes small or negative. Accordingly, the tracking capability of the optical pickup is decreased, and the optical pickup fails to track the groove in some cases. Additionally, in the optical-information recording medium that is rotated at a fixed linear velocity, there is a portion in which wobble groove portions of the groove that are adjacent to one another are close and have phases opposite to one another. In this portion, the optical pickup fails to track the groove more often.

### SUMMARY OF THE INVENTION

It is an object of the present invention to provide an optical-information reproducing system in which the tracking capability of an optical pickup can be increased, and in which the number of occurrences in which the optical pickup fails to track a groove can be reduced, by increasing a gain margin.

According to an aspect of the present invention, there is provided an optical-information reproducing system in which information recorded on an optical-information recording medium can be reproduced by rotating the optical-information recording medium at a fixed velocity that is a linear velocity of 3.49 m/s and by causing an optical pickup to track a groove in order to irradiate the groove with laser light. The optical-information recording medium includes the followings: an optically transparent substrate having a disk shape, one surface of which has a groove formed in a spiral shape, the groove having a wobble; a light-absorbing layer that is formed on the surface of the optically transparent substrate; and a light-reflecting layer that is formed on the light-absorbing layer. In the optical-information reproducing system, a higher-order resonance frequency of the optical pickup that is generated in a case in which the optical pickup is caused to track the groove is made lower than a wobble frequency that is reproduced using the groove without performing rotation control on the optical-information recording medium.

The optical-information reproducing system according to the aspect of the present invention is particularly effective in a case in which the wobble frequency is a frequency that is reproduced using the groove when the optical pickup is caused to move from an outer peripheral area to an inner peripheral area of the optical-information recording medium and then is caused to track the groove in the inner peripheral area. Additionally, the optical-information reproducing system according to the aspect of the present invention is also effective in a case in which the higher-order resonance frequency of the optical pickup ranges from 40 kHz to 100 kHz.

Advantages of the optical-information reproducing system according to the aspect of the present invention are described below. In other words, the higher-order resonance frequency of the optical pickup is made lower than the wobble frequency, whereby a gain margin can be prevented from being decreased because of a peak of the wobble frequency. Because a decrease in the gain margin can be minimized, the tracking capability of the optical pickup is increased, and the number of occurrences in which the optical pickup fails to track the groove is reduced.

According to the aspect of the present invention, the optical-information reproducing system can be obtained, in which the tracking capability of the optical pickup can be increased, and in which the number of occurrences in which the optical pickup fails to track the groove can be reduced, by increasing the gain margin.

### BRIEF DESCRIPTION OF THE DRAWINGS

Fig. 1 is a functional block diagram of an optical-information reproducing system according to an embodiment of the present invention.

Fig. 2 is a schematic sectional view of an optical-information recording medium.

Fig. 3 illustrates a state in which an optical pickup is caused to track a groove.

Fig. 4 illustrates a state in which the optical pickup is caused to track a groove.

Fig. 5 is a graph that shows gain, and that shows a gain margin which is a difference between a gain around a crossover frequency of a servo and a gain at a higher-order resonance frequency.

Fig. 6 is a graph that shows gain, and that shows a gain margin in a case in which a wobble frequency is superimposed on the higher-order resonance frequency.

### DESCRIPTION OF THE PREFERRED EMBODIMENTS

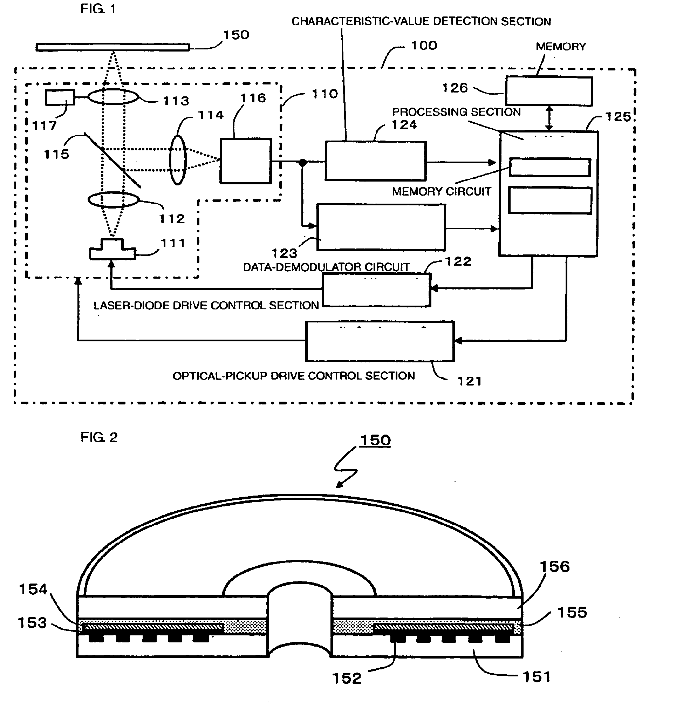

Fig. 1 is described below as a functional block diagram of a recording apparatus according to an embodiment of the present invention. An optical-disk reproduction apparatus 100 includes a memory 126, a processing section 125, a laser-diode drive control section 122, a data-demodulator circuit 123, a characteristic-value detection section 124, an optical pickup 110, an optical-pickup drive control section 121, a rotation control section (not shown) and a motor (not shown) that are used for an optical-information recording medium 150, a servo control section (not shown) used for the optical pickup 110, and so forth. In the memory 126, data that is being processed, data obtained as a processing result, data that is referred to in processing (for example, strategic data corresponding to each media identification (ID)), or the like is stored. The processing section 125 includes a central processing unit (CPU) that performs processing, and a memory circuit in which a program that allows data processing to be performed is recorded. The laser-diode drive control section 122 controls laser light for recording data and laser light for reproducing data. The data-demodulator circuit 123 performs a predetermined decoding process on a reproduction signal that is output. The characteristic-value detection section 124 detects the reproduction signal, thereby detecting a signal associated with focusing, tracking, or a wobble. The optical-pickup drive control section 121 controls a direction of laser light irradiated from the optical pickup 110.

The optical pickup 110 includes an objective lens 113, a beam splitter 115, a detection lens 114, a collimator lens 112, a laser diode 111, a photodetector 116, and an actuator 117. In the optical pickup 110, the actuator 117 is operated by control of the optical-pickup drive control section 121, whereby focusing and tracking are performed.

The processing section 125 is connected to the memory 126, the data-demodulator circuit 123, the characteristic-value detection section 124, the optical-pickup drive control section 121, the laser-diode drive control section 122, the rotation control section and the servo control section that are not shown, and so forth. The characteristic-value detection section 124 is connected to the photodetector 116 and the processing section 125. Additionally, the data-demodulator circuit 123 is connected to the photodetector 116 and the processing section 125. The optical-pickup drive control section 121 is connected to the processing section 125 and the optical pickup 110. Furthermore, the laser-diode drive control section 122 is connected to the processing section 125 and the laser diode 111. The processing section 125 is also connected to an input/output system (not shown) via an interface section (not shown).

Next, an outline of a process of reproducing data that is recorded on the optical-information recording medium 150 is described. The laser-diode drive control section 122 drives the laser diode 111 in response to an instruction issued by the processing section 125 to output the laser light for reproducing data. The laser light for reproducing data is irradiated onto the optical-information recording medium 150 via the collimator lens 112, the beam splitter 115, and the objective lens 113. Light reflected on the optical-information recording medium 150 is input to the photodetector 116 via the objective lens 113, the beam splitter 115, and the detection lens 114. The photodetector 116 converts the light reflected on the optical-information recording medium 150 into an electric signal, and outputs the electric signal to the data-demodulator circuit 123 as a reproduction signal. The data-demodulator circuit 123 performs the predetermined decoding process on the reproduction signal to obtain decoded data. The decoded data is output to a display section of the input/output system (not shown) via the processing section 125 and the interface section (not shown), thereby displaying the reproduced data.

Next, an example of the optical-information recording medium 150 according to an embodiment is described. The optical-information recording medium 150 shown in Fig. 2 includes an optically transparent substrate 151, which has a diameter of 12 cm, a thickness of 0.6 mm, and a disk shape, a light-absorbing layer 153, and a light-reflecting layer 154. A spiral groove 152 having a wobble is formed in one surface of the optically transparent substrate 151. The light-absorbing layer 153 is formed on the surface of the optically transparent substrate 151 in which the groove 152 is formed. The light-reflecting layer 154 is formed on the light-absorbing layer 153. Furthermore, a dummy substrate 156, which has a diameter of 12 cm, a thickness of 0.6 mm, and a disk shape, is attached to the top of the light-reflecting layer 154 via an adhesive layer 155.

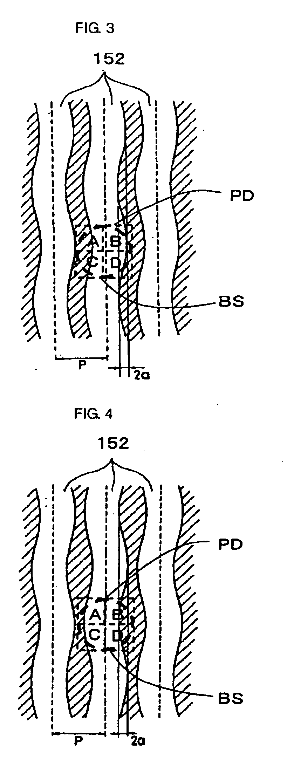

The optical-information recording medium 150 is rotated in such a manner that it has a linear velocity of 3.49 m/s when data is reproduced. Accordingly, regarding the relationship between the meander period of the groove 152 and line length corresponding to a circuit of the groove 152, there are the following two states: a same-phase state, i.e., a state in which the meander periods of groove portions of the groove 152 that are adjacent to one another are substantially the same, as shown in Fig. 3; and an opposite-phase state, i.e., a state in which the meander periods of groove portions of the groove 152 that are adjacent to one another are shifted by a half period from one another, as shown in Fig. 4. In the opposite-phase state, even when a pitch P of the groove portions of the groove 152 that are adjacent to one another is uniform, the actual spacing of the groove portions of the groove 152 is narrower only by a meander amplitude of 2a × 2. The narrower portion is a portion in which disturbance of a tracking signal easily occurs.

Next, an example of each section of the optical-information recording medium 150 is described. A preferred example of the optically transparent substrate 151 is described below. In other words, any one of various types of materials that are used as substrate materials of optical-information recording media in the related art can be selected as a substrate material of the optically transparent substrate 151. More specifically, examples of the substrate material include acrylic resins such as polycarbonate and polymethyl methacrylate. If necessary, substrates individually formed of the above-mentioned substrate materials may be stacked, resulting in a combination use of the substrate materials. From among the substrate materials, a thermoplastic resin is preferable in view of formability, moisture resistance, dimensional stability, low cost, and so forth. Polycarbonate is the most preferable material. When the resins are used, the optically transparent substrate 151 is formed in the shape of a disk by injection molding or the like. It is preferable that the groove 152, which is formed in one surface of the optically transparent substrate 151, have, for example, a depth of 135 nm to 170 nm, and an amplitude of typically 20 nm to 35 nm (peak to peak).

A preferred example of the light-absorbing layer 153 is described below. In other words, it is preferable that the light-absorbing layer 153 be a recording layer having a coloring material, in which data can be recorded using pits that are formed by irradiating the light-absorbing layer 153 with laser light. As an organic dye, a phthalocyanine dye, a cyanine dye, an azo dye, or the like is preferable. By irradiating the light-absorbing layer 153 with laser light, data information such as information concerning a music piece, an image, or a computer program can be recorded in the light-absorbing layer 153 and/or reproduced from the light-absorbing layer 153. Additionally, the light-absorbing layer 153 is formed as follows: an application liquid is prepared by dissolving the coloring material together with a binder or the like in an appropriate solvent; next, the application liquid is applied, by spin coating, screen printing, or the like, over the surface of the optically transparent substrate 151 in which the groove 152 is formed, resulting in formation of a coating film; and after that, the coating film is dried out.

A preferred example of the light-reflecting layer 154 is described below. The light-reflecting layer 154 reflects the laser light for recording data and/or the laser light for reproducing data. As the light-reflecting layer 154, a metallic film formed of, for example, Au, Al, Ag, Cu, or Pb, an alloy film formed of Au, Al, Ag, Cu, or Pb, an alloy film formed by adding a minor component to Au, Al, Ag, Cu, or Pb, or the like is preferable. It is preferable that the light-reflecting layer 154 be formed, for example, by ion plating, sputtering, or the like, on the surface of the optically transparent substrate 151 in which the groove 152 is formed. More particularly, sputtering is the most preferable technique in view of mass productivity, and cost.

A preferred example of the dummy substrate 156 is described below. The dummy substrate 156 is used to match the entire thickness of the optical-information recording medium 150 to the thickness of a CD-R. The diameter and thickness of the dummy substrate 156 are the same as those of the optically transparent substrate 151. As a substrate material of the dummy substrate 156, a substrate material similar to that of the optically transparent substrate 151 can be used. More specifically, examples of the substrate material include acrylic resins such as polycarbonate and polymethyl methacrylate. If necessary, substrates individually formed of the above-mentioned substrate materials, resulting in a combination use of the substrate materials. From among the substrate materials, a thermoplastic resin is preferable in view of formability, moisture resistance, dimensional stability, low cost, and so forth. Polycarbonate is the most preferable material. The dummy substrate 156 is attached to the top of the light-reflecting layer 154 via the adhesive layer 155 that is formed of an optically transparent hardening resin.

Next, an operation of an optical-information reproducing system according to the embodiment of the present invention is described. In the photodetector 116, a photo detector unit PD is divided into four areas as shown in Figs. 3 and 4. In each of the areas, a corresponding one of intensities of the reflected light can be detected. The reflected light, which is reflected on the optical-information recording medium 150, is detected by the photodetector 116, and is converted into an electric signal. The electric signal is input to the characteristic-value detection section 124. The characteristic-value detection section 124 generates a push-pull signal using the intensities of the reflected light, which are detected in the corresponding areas of the photo detector unit PD of the photodetector 116, and inputs the push-pull signal to the processing section 125. The processing section 125 inputs a control signal to the optical-pickup drive control section 121 on the basis of the obtained push-pull signal. The processing section 125 operates the servo control section (not shown) and the actuator 117 so that a beam spot BS can track the groove 152.

The groove 152 is designed so as to have a meander period with which a wobble frequency becomes higher than 140 kHz that is obtained in the related art when the optical-information recording medium 150 is rotated at a linear velocity of 3.49 m/s. In this case, the wobble frequency that is reproduced at an instant at which the optical pickup 110 is caused to track the groove 152 decreases to a value higher than that obtained in the related art. For example, when the meander period of the groove 152 is about 280 kHz, a wobble frequency at an instant at which the optical pickup 110 is moved from the outermost periphery to the innermost periphery of a recording area of the optical-information recording medium 150 becomes about 110 kHz.

In this manner, by decreasing the meander period of the groove 152, the lowest wobble frequency that is reproduced at an instant at which the optical pickup 110 of the optical-information recording medium 150 is caused to track the groove 152 can be made higher than a higher-order resonance frequency of the optical pickup 110.

When the lowest wobble frequency is made higher than the higher-order resonance frequency of the optical pickup 110, a gain margin is not influenced by the wobble frequency. Accordingly, the gain margin can be prevented from being decreased because of a peak of the wobble frequency, and a decrease in the gain margin can be minimized.

The higher-order resonance frequency of the optical pickup 110 can be made higher than 40 kHz by reducing the weight of the objective lens 113 or by increasing the stiffness of an objective-lens-holding unit. For example, a method can be used, in which the weight of the objective-lens-holding unit of the objective lens 113 is reduced by forming the objective-lens-holding unit containing an aluminum material, or a resin material, compared with the weight of the objective-lens-holding unit formed of a metallurgical material such as iron. Alternatively, in order to adjust the strength of a spring that urges the optical pickup 110, for example, a hard spring can be used. The above methods can be used as methods for increasing the higher-order resonance frequency of the optical pickup 110 by suppressing vibration of the optical pickup 110 that occurs when the optical pickup 110 is moved between the outer and inter peripheries. The methods for increasing the higher-order resonance frequency of the optical pickup 110 are not limited the above-mentioned methods, and various methods can be employed. Furthermore, when data of a DVD-R is reproduced at 8X speed (inter periphery) or at 20X speed (outer periphery), or when data of a blu-ray disk (BD) is recorded/reproduced, it is necessary that the higher-order resonance frequency of the optical pickup 110 be increased to 100 kHz using any one of the methods. Thus, when the higher-order resonance frequency of the optical pickup 110 ranges from 40 kHz to 100 kHz, the optical-information reproducing system according to the embodiment of the present invention is particularly effective.

In the foregoing embodiment, the wobble frequency is described, which is reproduced using the groove when the optical pickup is moved from the outermost periphery to the innermost periphery of the recording area of the optical-information recording medium. The present invention is not limited to the above-described embodiment. For example, the optical-information reproducing system according to the embodiment of the present invention is also effective in a case in which the optical pickup is moved from a recording area of the optical-information recording medium that is positioned at a radial distance of about 50 mm to a recording area of the optical-information recording medium that is positioned at a radial distance of about 30 mm. In other words, the optical-information reproducing system according to the embodiment of the present invention is effective in a case in which the rotational speed of the optical-information recording medium is temporarily not controlled when the optical pickup is moved.

In the above-described embodiment, for example, the meander period of the groove is set to about 280 kHz as a meander period with which the wobble frequency becomes higher than 140 kHz that is obtained in the related art. The value of the meander period is not limited thereto. The meander period of the groove can be set using the relationship between the meander period of the groove and the higher-order resonance frequency of the optical pickup.

## Claims

1. An optical-information reproducing system in which information recorded on an optical-information recording medium (150) can be reproduced by rotating the optical-information recording medium at a fixed velocity that is a linear velocity of 3.49 m/s and by causing an optical pickup (110) to track a groove in order to irradiate the groove with laser light, the optical-information recording medium including
an optically transparent substrate (151) having a disk shape, one surface of which has a groove (152) formed in a spiral shape, the groove having a wobble,
a light-absorbing layer (153) that is formed on the surface of the optically transparent substrate, and
a light-reflecting layer (154) that is formed on the light-absorbing layer,
**characterized in that** : a higher-order resonance frequency of the optical pickup that is generated in a case in which the optical pickup is caused to track the groove is made lower than a wobble frequency that is reproduced using the groove without performing rotation control on the optical-information recording medium.

2. The optical-information reproducing system according to Claim 1, wherein the wobble frequency is a frequency that is reproduced using the groove when the optical pickup is caused to move from an outer peripheral area to an inner peripheral area of the optical-information recording medium and then is caused to track the groove in the inner peripheral area.

3. The optical-information reproducing system according to Claim 1, wherein the higher-order resonance frequency of the optical pickup ranges from 40 kHz to 100 kHz.

## Patentansprüche

1. System zur Reproduktion bzw. Wiedergabe optischer Informationen, bei dem Informationen, die auf einem Aufzeichnungsmedium (150) für optische Informationen aufgezeichnet sind, reproduziert bzw. wiedergegeben werden können, indem das Aufzeichnungsmedium für optische Informationen mit einer festen Geschwindigkeit gedreht wird, die eine lineare Geschwindigkeit von 3,49 m/s ist, und ein optischer Aufnehmer (110) veranlasst wird, eine Rille zu verfolgen bzw. abzufahren, um die Rille mit Laserlicht zu bestrahlen, wobei das Aufzeichnungsmedium für optische Informationen enthält
ein optisch transparentes Substrat (151) mit einer Scheibenform, dessen eine Fläche bzw. Oberfläche eine Rille (152) aufweist, die spiralförmig gebildet ist, wobei die Rille eine Wobbelung bzw. Wobbeln bzw. schwankenden Verlauf aufweist,
eine lichtabsorbierende Schicht (153), die auf der Fläche bzw. Oberfläche des optisch transparenten Substrats gebildet ist, und
eine lichtreflektierende Schicht (154), die auf der lichtabsorbierenden Schicht gebildet ist,
**dadurch gekennzeichnet, dass**:
eine Resonanzfrequenz höherer Ordnung des optischen Aufnehmers, die in einem Fall erzeugt wird, in dem der optische Aufnehmer veranlasst wird, die Rille zu verfolgen, kleiner ist als eine Wobbelfrequenz, die unter Verwendung der Rille reproduziert wird, ohne dass eine Drehungssteuerung bzw. -regelung an dem bzw. für das Aufzeichnungsmedium für optische Informationen durchgeführt wird.

2. System zur Reproduktion optischer Informationen nach Anspruch 1, wobei die Wobbelfrequenz eine Frequenz ist, die unter Verwendung der Rille reproduziert wird, wenn der optischen Aufnehmer veranlasst wird, sich von einem äußeren Umfangsbereich zu einem inneren Umfangsbereich des Aufzeichnungsmediums für optische Informationen zu bewegen und dann veranlasst wird, die Rille in dem inneren Umfangsbereich zu verfolgen.

3. System zur Reproduktion optischer Informationen nach Anspruch 1, wobei die Resonanzfrequenz höherer Ordnung des optischen Aufnehmers in dem Bereich von 40 kHz bis 100 kHz liegt.

## Revendications

1. Système de reproduction d'informations optiques dans lequel des informations enregistrées dans un support d'enregistrement d'informations optiques (150), peuvent être reproduites en faisant tourner le support d'enregistrement d'informations optiques à une vitesse fixe qui est une vitesse linéaire de 3,49 m/s et en contraignant une tête de lecture optique (110) à suivre une rainure de manière à éclairer la rainure avec une lumière laser, le support d'enregistrement d'informations optiques comprenant :
➢ un substrat transparent de manière optique (151) qui présente une forme de disque, dont une surface présente une rainure (152) formée en forme de spirale, la rainure présentant une vobulation,
➢ une couche qui absorbe la lumière (153) qui est formée sur la surface du substrat transparent de manière optique, et
➢ une couche qui réfléchit la lumière (154) qui est formé sur la couche qui absorbe la lumière,
**caractérisé en ce qu'**une fréquence de résonance d'ordre élevé de la tête de lecture optique qui est générée dans un cas où la tête de lecture optique est contrainte de suivre la rainure, est rendue inférieure à une fréquence de vobulation qui est reproduite en utilisant la rainure sans procéder à une commande de rotation sur le support d'enregistrement d'informations optiques.

2. Système de reproduction d'informations optiques selon la revendication 1, dans lequel la fréquence de vobulation est une fréquence qui est reproduite en utilisant la rainure lorsque la tête de lecture optique est contrainte de se déplacer à partir d'une zone périphérique extérieure vers une zone périphérique intérieure du support d'enregistrement d'informations optiques et est ensuite contrainte de suivre la rainure dans la zone périphérique intérieure.

3. Système de reproduction d'informations optiques selon la revendication 1, dans lequel la fréquence de résonance d'ordre élevé de la tête de lecture optique s'étend de 40 kHz à 100 kHz.
